# EUROPÄISCHE PATENTSCHRIFT

(11) **EP 0 754 330 B1**
(45) Veröffentlichungstag und Bekanntmachung des Hinweises auf die Patenterteilung: **04.10.2001**
(21) Anmeldenummer: 96900840.8
(22) Anmeldetag: 24.01.1996
(51) Int. Cl.: G06K 15/12, B41J 2/44, H01S 5/068

(54) **OPTOELEKTRONISCHES AUFZEICHNUNGSORGAN**
OPTOELECTRONIC RECORDING UNIT
UNITE D'ENREGISTREMENT OPTOELECTRONIQUE

(30) Priorität: 08.02.1995 DE 29502016 U
(43) Veröffentlichungstag der Anmeldung: 22.01.1997
(73) Patentinhaber: Heidelberger Druckmaschinen Aktiengesellschaft, 69115 Heidelberg (DE)
(72) Erfinder: BRÖMSE, Norbert, D-60489 Frankfurt (DE)
(86) Internationale Anmeldenummer: DE9600093
(87) Internationale Veröffentlichungsnummer: WO9624908

(56) Entgegenhaltungen:
- WO-A-92/10015
- PATENT ABSTRACTS OF JAPAN vol. 10, no. 170 (E-412), 17.Juni 1986 & JP,A,61 023377 (NIPPON DENKI KK), 31.Januar 1986,
- PATENT ABSTRACTS OF JAPAN vol. 9, no. 325 (E-368), 20.Dezember 1985 & JP,A,60 158682 (TOSHIBA KK), 20.August 1985,

## Beschreibung

Die Erfindung bezieht sich auf das Gebiet der elektronischen Reproduktionstechnik und betrifft ein optoelektronisches Aufzeichnungsorgan eines Aufzeichnungsgerätes, auch Recorder oder Belichter genannt, zur punkt- und zeilenweisen Aufzeichnung von Information auf ein Aufzeichnungsmaterial.

Ein solches Aufzeichnungsorgan besteht im wesentlichen aus einer Lichtquelle zur Erzeugung eines helligkeitsmodulierten Lichtstahles, einer von einem Bildsignal beaufschlagten Ansteuerschaltung für die Lichtquelle, einer auf der optischen Achse der Lichtquelle angeordneten Objektiv zur Fokussierung des Lichtstrahles auf das Aufzeichnungsmaterial und einer Blende zur Begrenzung des Lichtstrahles. Das Bildsignal enthält die aufzuzeichnende Information. Der durch das Bildsignal helligkeitsmodulierte Lichtstrahl nimmt die punkt- und zeilenweise Belichtung des Aufzeichnungsmaterials, beispielsweise eines Filmes, vor. Als Lichtquelle wird häufig eine Laserdiode verwendet, deren abgegebene Lichtleistung von einem Treiberstrom durch die Laserdiode bestimmt wird. Der Treiberstrom wird in Abhängigkeit von dem Bildsignal in der Ansteuerschaltung erzeugt.

Zur Belichtung von zweipegeliger Schwarz/Weiß-Information arbeitet die Laserdiode im Schalt-Betrieb, in dem das von der Laserdiode abgegebene Licht durch den Treiberstrom ein- und ausgeschaltet wird. Um eine hohe Aufzeichnungsqualität zu erreichen, muß der Pegel des abgegebenen Lichtes in den Einschalt-Intervallen der Laserdiode konstant sein. Die Forderung nach einem konstanten Lichtpegel in den Einschalt-Intervallen erfüllt eine Laserdiode von Natur aus nicht, da die abgegebene Lichtleistung einer Laserdiode temperaturabhängig ist.

Es ist bekannt, die Lichtleistungs-Abgabe einer Laserdiode durch eine Lichtregelung zu stabilisieren. Dazu wird das von der Laserdiode abgegebene Licht mittels eines Lichtdetektors gemessen und das von dem Lichtdetektor erzeugte Meßsignal als Istwert über einen Rückkopplungszweig an einen Regler für den Treiberstrom zurückgeführt.

Der Lichtdetektor ist beispielsweise eine Photodiode, auch Monitordiode oder PIN-Diode genannt. Die Laserdiode und die damit optisch gekoppelte Monitordiode sind häufig in einem gemeinsamen Gehäuse integriert. Die Verwendung einer internen Monitordiode hat den Nachteil, daß das von ihr erzeugte Meßsignal klein und verrauscht ist, so daß dadurch keine gute Regelqualität und somit auch keine hohe Stabilität der Lichtleistung erreicht wird.

Die Verwendung einer externen Monitordiode, d.h. einer Monitordiode, die nicht mit der Laserdiode in einem gemeinsamen Gehäuse untergebracht ist, ist aus der EP-A- 0 511 354 bekannt. Dort erfolgt die optische Kopplung zwischen der Laserdiode und der örtlich versetzten Monitordiode über einen im Strahlengang des Lichtstrahles angeordneten planen Teilerspiegel, der einen Anteil des Lichtstrahles auskoppelt und auf die externe Monitordiode reflektiert. Die Benutzung eines Teilerspiegels hat den Nachteil, daß die Lichtleistung des zur Belichtung verwendeten Lichtstrahles reduziert und zusätzlich ein Objektiv benötigt wird, welches den ausgekoppelten Lichtanteil auf die Monitordiode fokussiert. Außerdem ergibt sich bei der bekannten Anordnung ein relativ langer Lichtweg zwischen Laserdiode und Monitordiode, so daß das Meßsignal entsprechend zeitverzögert und dadurch die Regelung in der Bandbreite erheblich eingeschränkt ist.

Der im Anspruch 1 angegebenen Erfindung liegt daher die Aufgabe zugrunde, ein optoelektronisches Aufzeichnungsorgan mit einer Laserdiode derart zu verbessern, daß eine genaue und schnelle Regelung der von der Laserdiode abgegebenen Lichtleistung erreicht wird.

Vorteilhafte Weiterbildungen sind in den Unteransprüchen angegeben.

Die Erfindung wird nachfolgend anhand der Fig. 1 bis 3 näher erläutert.

Es zeigen:
- Fig. 1: ein Ausführungsbeispiel für ein optoelektronisches Aufzeichnungsorgan im Schnittbild mit einem gedrehten Hohlspiegel,
- Fig. 2: ein anderes Ausführungsbeispiel für ein optoelektronisches Aufzeichnungsorgan im Schnittbild mit einem versetzten Hohlspiegel **und**
- Fig. 3: ein weiteres Ausführungsbeispiel für ein optoelektronisches Aufzeichnungsorgan im Schnittbild mit einer bevorzugten Anordnung von Laserdiode und Monitordiode.

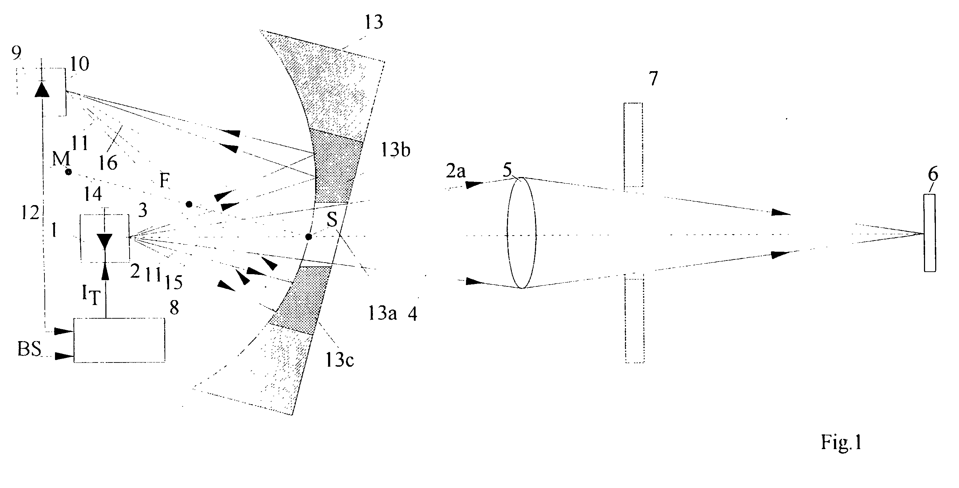

Fig. 1 zeigt ein erstes Ausführungsbeispiel für ein optoelektronisches Aufzeichnungsorgan im Schnittbild mit einem gedreht angeordneten Hohlspiegel.

Eine Laserdiode (1) erzeugt ein divergierendes Lichtbündel (2), von dem nur der innere Kern als Belichtungsbündel (2a) genutzt wird. Das Lichtbündel (2) tritt durch eine Fläche, nachfolgend Lichtaustrittsfenster (3) genannt, aus der Laserdiode (1) aus. Das Belichtungsbündel (2a) wird mittels eines auf der optischen Achse (4) angeordneten Objektivs (5) auf ein Aufzeichnungsmaterial (6) fokussiert und mittels einer Blende (7) begrenzt. Der Treiberstrom (I_{T}) für die Laserdiode (1) wird in einer Ansteuerschaltung (8) erzeugt. Die Ansteuerschaltung (8) ist mit einem Bildsignal (BS) beaufschlagt, das die aufzuzeichnende Information enthält. Der durch das Bildsignal (BS) gesteuerte Treiberstrom (I_{T}) schaltet das Lichtbündel (2) entsprechend der aufzuzeichnenden Information ein und aus.

Die Konstanthaltung der Lichtleistung des Lichtbündels (2) in den Einschalt-Intervallen der Laserdiode (1) erfolgt durch Regelung mittels eines Reglers, der Bestandteil der Ansteuerschaltung (8) ist. Zur Erfassung des Lichtleistungs-Istwertes für die Regelung ist als Lichtdetektor eine Monitordiode (9) vorhanden, die außerhalb des Gehäuses der Laserdiode (1) angeordnet ist. Der auf die lichtempfindliche Fläche der Monitordiode (9), nachfolgend Lichteintrittsfenster (10) genannt, einfallende Lichtanteil (11) des Lichtstrahles (2) wird in der Monitordiode (9) in ein den Lichtleistungs-Istwert erfassendes Meßsignal umgesetzt, das über einen Rückkopplungszweig (12) auf den internen Regler der Ansteuerschaltung (8) zurückgeführt wird.

Um eine genaue und schnelle Regelung der von der Laserdiode (1) abgegeben Lichtleistung zu erzielen, ist erfindungsgemäß zwischen der Laserdiode (1) und dem Objektiv (5) ein Hohlspiegel (13) mit einer Öffnung (13a) oder mindestens ein Spiegelsegment (13b; 13c) eines Hohlspiegels derart angeordnet, daß das für die Belichtung des Aufzeichnungsmaterials (6) benutzte Belichtungsbündel (2a) durch die Öffnung (13a) des Hohlspiegels (13) bzw. durch die Spiegelsegmente (13b, 13c) ohne Lichtverluste hindurchtritt und der das Belichtungsbündel (2a) ummantelnde Lichtanteil (11) des Lichtbündeis (2) von dem Hohlspiegel (13) bzw. von den Spiegelsegmenten (13b, 13c) fast nahezu vollständig auf das Lichteintrittsfenster (10) der Monitordiode (9) fokussiert wird. Der Hohlspiegel (13) kann beispielsweise sphärisch, elliptisch oder parabolisch ausgebildet sein.

In dem Ausführungsbeispiel nach Fig. 1 wird ein sphärischer Hohlspiegel (13) verwendet. Der sphärische Hohlspiegel (13) hat eine Hauptachse (14), auf der der Mittelpunkt (M) der sphärischen Spiegelfläche mit dem Radius (R) um den Mittelpunkt (M) liegt. Der Schnittpunkt der Hauptachse (14) mit der sphärischen Spiegelfläche wird als Scheitel (S) bezeichnet. Der Brennpunkt (F) des sphärischen Hohlspiegels (13) auf der Hauptachse (14) halbiert die Strecke zwischen Mittelpunkt (M) und Scheitel (S). Ein Gegenstand wird durch den Hohlspiegel (13) entsprechend dem Verhältnis von Gegenstandsweite zur Bildweite abgebildet.

In dem in Fig. 1 dargestellten Ausführungsbeispiel liegt der Scheitel (S) des sphärischen Hohfspiegels (13) auf der optischen Achse (4) des Aufzeichnungsorgans, und der sphärische Hohlspiegel (13) ist derart um seinen Scheitel (S) gedreht angeordnet, daß das Lichtaustrittsfenster (3) der Laserdiode (1) auf das Lichteintrittsfenster (10) der Monitordiode (9) abgebildet wird. Dies ist dann der Fall, wenn die Hauptachse (14) des sphärischen Hohlspiegels (13) den Winkel halbiert, den dieser mit der Abstandsgeraden (15) zwischen Laserdiode (1) und Scheitel (S) und der Abstandsgeraden (16) zwischen Monitordiode (9) und Scheitel (S) einschließt. Die Mittellinie der Öffnung (13a) des sphärischen Hohlspiegels (13) fällt mit der optischen Achse (4) des Aufzeichnungsorgans zusammen. Der Durchmesser der Öffnung (13a) ist etwas größer gewählt als der Durchmesser des Belichtungsbündels (2a) im Bereich des sphärischen Hohlspiegels (13), so daß das Belichtungsbündel (2a) durch die Öffnung (13a) des sphärischen Hohlspiegel (13) ohne Lichtverlust hindurchtritt.

Für den Fall, daß nur die Spiegelsegmente (13b, 13c) verwendet werden, haben diese im Bereich der optischen Achse (4) einen Abstand voneinander, der dem Durchmesser der Öffnung (13a) entspricht.

Der Hohlspiegel (13) oder die Spiegelsegmente (13b, 13c) sind beispielsweise Glaskörper, deren Innenfläche mit Aluminium verspiegelt ist.

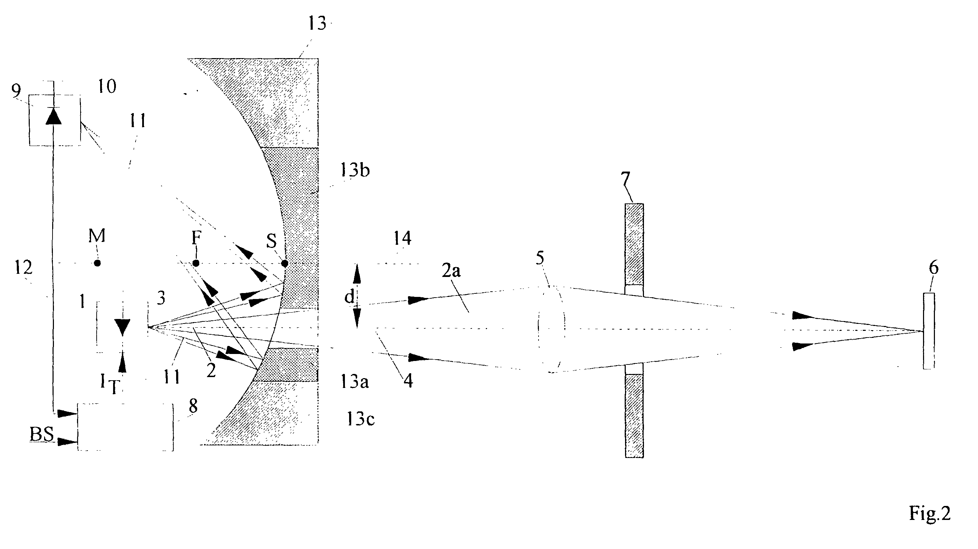

Fig. 2 zeigt ein zweites Ausführungsbeispiel für ein optoelektronisches Aufzeichnungsorgan im Schnittbild, mit einem versetzt angeordneten Hohlspiegel.

Das zweite Ausführungsbeispiel, bei dem ebenfalls ein sphärischer Hohlspiegel (13) verwendet wird, unterscheidet sich von dem ersten Ausführungsbeispiel dadurch, daß der sphärische Hohlspiegel (13) zur optischen Achse (4) des Aufzeichnungsorgans parallel versetzt und nicht, wie im ersten Ausführungsbeispiel, gedreht angeordnet ist. In diesem Fall hat der sphärische Hohlspiegel (13) eine Öffnung (13a), deren Mittellinie einen Abstand (d) von der Hauptachse (14) des Hohlspiegels (13) aufweist. Die Parallelversetzung des sphärischen Hohlspiegels (13) ist so getroffen, daß die Hauptachse (14) des sphärischen Hohlspiegels (13) einen Abstand (d) zur optischen Achse (4) des Aufzeichnungsorgans aufweist. Die Mittellinie der Öffnung (13a) des sphärischen Hohlspiegels (13) fällt dann mit der optischen Achse (4) des Aufzeichnungsorgans zusammen, und das Belichtungsbündel (2a) tritt wiederum ohne Lichtverlust durch die Öffnung (13a) des Hohlspiegels (13).

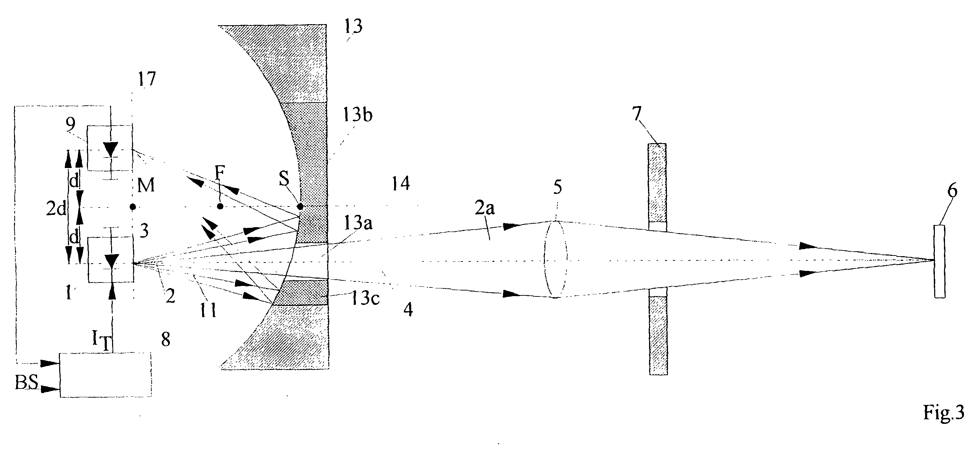

Fig. 3 zeigt ein weiteres Ausführungsbeispiel für ein optoelektronisches Aufzeichnungsorgan im Schnittbild mit einer bevorzugten Anordnung von Laserdiode (1) und Monitordiode (9). Bei diesem Ausführungsbeispiel ist der sphärische Hohlspiegel (13) wie im Ausführungsbeispiel nach Fig. 2 ebenfalls um den Abstand (d) versetzt zur optischen Achse (4) angeordnet ist. Der Unterschied zum Ausführungsbeispiel nach Fig. 2 besteht darin, daß die Mittelpunkte des Lichtaustrittsfensters (3) der Laserdiode (1) und des Lichteintrittsfensters (10) der Monitordiode (9) auf einer zur optischen Achse (4) des optoelektronischen Aufzeichnungsorgans senkrechten Geraden (17) im Abstand (2d) positioniert sind. Der Abstand zwischen der Geraden (17) und dem Hohlspiegel (13) ist derart gewählt, daß der Brennpunkt (F) des Hohlspiegels (13) mittig auf der Hauptachse (14) zwischen dem Scheitel (S) und dem Schnittpunkt (18) der Hauptachse (14) mit der Geraden (17) liegt. Der Schnittpunkt (18) hat jeweils den Abstand (d) zu den Mittelpunkten des Lichtaustrittsfensters (3) der Laserdiode (1) und des Lichteintrittsfensters (10) der Monitordiode (9).

Bei dieser Anordnung wird das Lichtaustrittsfenster (3) der Laserdiode (1) im Maßstab 1:1 auf dem Lichteintrittsfenster (10) der Monitordiode (9) abgebildet. Der Lichtweg zwischen Laserdiode (1) und Monitordiode (9) ist minimal, und es ergeben sich geringe elektrische Laufzeiten. Der Abstand zwischen Laserdiode (1) und Monitordiode (9) ist durch den minimalen Bauabstand dieser Bauelemente bestimmt.

Bei dem Ausführungsbeispiel nach den Fig. 2 und 3 können anstelle eines kompletten Hohlspiegels (13) mit einer Öffnung (13a) wiederum auch entsprechend positionierte Spiegelsegmente (13b, 13c) eines Hohlspiegels (13) verwendet werden.

In allen Ausführungsbeispielen kann die Monitordiode (9) derart gedreht angeordnet sein, daß das Licht senkrecht auf das Lichteintrittsfenster (10) trifft.

Die erfindungsgemäße Verwendung eines Hohlspiegels zur Reflexion eines Lichtanteiles des zu Belichtung benutzen Belichtungsbündel auf eine externe Monitordiode zum Zwecke der Regelung der von einer Laserdiode abgegebenen Lichtleistung hat darüber hinaus folgende Vorteile. Dadurch, daß das Belichtungsbündel den Hohlspiegel ohne wesentliche Lichtverluste durchläuft, kann ein großer Anteil des von der Laserdiode erzeugten Lichtes zur Belichtung des Aufzeichnungsmaterials genutzt werden. Außerdem werden keine hohen Qualitätsanforderungen an den Hohlspiegel gestellt, da das Belichtungsbündel nicht mit dem Hohlspiegel in Berührung kommt. Durch die Verwendung eines Hohlspiegels als Lichtreflektor und die spezielle Anordnung des Hohlspiegels innerhalb des Aufzeichnungsorgans wird ein hoher Anteil des von der Laserdiode erzeugten Lichtes außerhalb des Belichtungsbündels auf die Monitordiode reflektiert, wodurch eine große Regelsignalamplitude gewonnen und dadurch die Lichtleistung der Laserdiode mit einer hohen Genauigkeit geregelt werden kann. Durch die gewählte Anordnung von Laserdiode, Monitordiode und Hohlspiegel ist der Lichtweg zwischen Laserdiode und Monitordiode und damit die Zeitverzögerung des Regelsignals relativ kurz. Dadurch kann die Lichtleistung der Laserdiode auch bei einer hohen Modulationsfrequenz mit großer Geschwindigkeit geregelt werden. Die schnelle und genaue Regelung des von der Laserdiode abgegebenen Laserlichtes zur Belichtung des Aufzeichnungsmaterials in einem Aufzeichnungsgerät führt in vorteilhafter Weise zu einer wesentlichen Verbesserung der Aufzeichnungsqualität.

## Patentansprüche

1. Optoelektronisches Aufzeichnungsorgan zur punkt- und zeilenweisen Aufzeichnung von Information auf ein Aufzeichnungsmaterial, bestehend aus
- einer Laserdiode (1) zur Erzeugung eines Lichtbündels (2) entlang einer optischen Achse (4),
- einem auf der optischen Achse(4) angeordneten Objektiv (5) zur Fokussierung des Lichtbündels (2) auf das Aufzeichnungsmaterial (6),
- einem von der Laserdiode (1) beabstandet angeordneten Lichtdetektor (9) zur Messung der Lichtleistung des Lichtbündels (2) u n d
- einem im Strahlengang des Lichtbündels (2) angeordneten Reflektor, der einen Anteil des Lichtbündels (2) auf den Lichtdetektor (9) reflektiert, **dadurch gekennzeichnet, daß**
- der Reflektor als mindestens ein Spiegelsegment (13b, 13c) eines Hohlspiegels (13), vorzugsweise als Hohlspiegel (13), ausgebildet ist, der zwischen der Laserdiode (1) und dem Objektiv (5) positioniert ist und dessen Scheitel (S) im Bereich, vorzugsweise auf, der optischen Achse (4) liegt,
- der Hohlspiegel (13) derart um den Scheitel (S) gedreht angeordnet ist, **daß** die Hauptachse (14) des Hohlspiegels (13) den Winkel im wesentlichen halbiert, den die Abstandsgerade (15) zwischen der Laserdiode (1) und dem Scheitel (S) und die Abstandsgerade (16) zwischen dem Lichtdetektor (9) einschließt u n d
- der Hohlspiegel (13) eine Öffnung (13a) aufweist, deren Mittellinie im wesentlichen mit der optischen Achse (4) zusammenfällt und deren Durchmesser mindestens dem Durchmesser des für die Aufzeichnung verwendeten Lichtanteils (2a) des Lichtbündels (2) im Bereich des Hohlspiegels (13) entspricht, wodurch der für die Aufzeichnung verwendete Lichtanteil (2a) des Lichtbündels (2) verlustfrei durch den Hohlspiegel (13) hindurchtritt und der für die Aufzeichnung nicht genutzte Lichtanteil (11) des Lichtbündels (2) nahezu vollständig auf den Lichtdetektor (9) fokussiert wird.

2. Optoelektronisches Aufzeichnungsorgan zur punkt- und zeilenweisen Aufzeichnung von Information auf ein Aufzeichnungsmaterial, bestehend aus
- einer Laserdiode (1) zur Erzeugung eines Lichtbündels (2) entlang einer optischen Achse (4),
- einem auf der optischen Achse(4) angeordneten Objektiv (5) zur Fokussierung des Lichtbündels (2) auf das Aufzeichnungsmaterial (6),
- einem von der Laserdiode (1) beabstandet angeordneten Lichtdetektor (9) zur Messung der Lichtleistung des Lichtbündels (2) u n d
- einem im Strahlengang des Lichtbündels (2) angeordneten Reflektor, der einen Anteil des Lichtbündels (2) auf den Lichtdetektor (9) reflektiert, **dadurch gekennzeichnet, daß**
- der Reflektor als mindestens ein Spiegelsegment (13b, 13c) eines Hohlspiegels (13), vorzugsweise als Hohlspiegel (13), ausgebildet ist, der zwischen der Laserdiode (1) und dem Objektiv (5) positioniert ist,
- der Hohlspiegel (13) derart versetzt zur optischen Achse (4) angeordnet ist, **daß** die Hauptachse (14) des Hohlspiegels (13) im wesentlichen parallel in einem Abstand (d) zur optischen Achse (4) verläuft, u n d
- der Hohlspiegel (13) eine Öffnung (13a) aufweist, deren Mittellinie im wesentlichen den Abstand (d) zur Hauptachse (14) aufweist und deren Durchmesser mindestens dem Durchmesser des für die Aufzeichnung verwendeten Lichtanteils (2a) des Lichtbündels (2) im Bereich des Hohlspiegels (13) entspricht, wodurch der für die Aufzeichnung verwendete Lichtanteil (2a) des Lichtbündels (2) verlustfrei durch den Hohlspiegel (13) hindurchtritt und der für die Aufzeichnung nicht genutzte Lichtanteil (11) des Lichtbündels (2) nahezu vollständig auf den Lichtdetektor (9) fokussiert wird.

3. Optoelektronisches Aufzeichnungsorgan nach Anspruch 2, **dadurch gekennzeichnet, daß** Laserdiode (1) und Lichtdetektor (9) auf einer im wesentlichen senkrecht zur Hauptachse (14) des Hohlspiegels (13) verlaufenden Geraden (17) angeordnet sind und jeweils den Abstand (d) von der Hauptachse (14) aufweisen.

4. Optoelektronisches Aufzeichnungsorgan nach einem der Ansprüche 1 bis 3,
**dadurch gekennzeichnet, daß** der Hohlspiegel (13) sphärisch ausgebildet ist.

5. Optoelektronisches Aufzeichnungsorgan nach Anspruch 3 und 4, **dadurch gekennzeichnet, daß** der Abstand zwischen der Geraden (17) und dem Hohlspiegel (13) so gewählt ist, **daß** der Mittelpunkt (M) des sphärischen Hohlspiegels (13) auf der Geraden (17) liegt.

6. Optoelektronisches Aufzeichnungsorgan nach einem der Ansprüche 1 bis 5, **dadurch gekennzeichnet, daß** der Hohlspiegel (13) aus einem Glaskörper besteht, dessen Spiegelfläche mit Aluminium bedampft ist.

7. Optoelektronisches Aufzeichnungsorgan nach einem der Ansprüche 1 bis 6, **dadurch gekennzeichnet, daß**
- das der mittels des Hohlspiegels (13) auf den Lichtdetektor (9) fokussierte Lichtanteil (11) des Lichtbündels (2) in ein Meßsignal umgewandelt wird und
- das Meßsignal als Istwert zur Regelung der von der Laserdiode (1) abgegebenen Lichtleistung verwendet wird.

8. Optoelektronisches Aufzeichnungsorgan nach einem der Ansprüche 1 bis 7,
**dadurch gekennzeichnet, daß** als Lichtdektor (9) eine Monitordiode verwendet wird.

## Claims

1. Optoelectronic recording device for dot and line recording of information on a recording material, comprising
- a laser diode (1) for generating a light beam (2) along an optical axis (4),
- a lens (5) arranged on the optical axis (4) for focusing the light beam (2) on to the recording material (6),
- a light detector (9) arranged at a distance from the laser diode (1), for measuring the light output of the light beam (2) and
- a reflector arranged in the ray path of the light beam (2), which reflects a portion of the light beam (2) on to the light detector (9), **characterized in that**
- the reflector is formed as at least one segment (13b, 13c) of a concave mirror (13), preferably as a concave mirror (13) which is positioned between the laser diode (1) and the lens (5) and whose vertex (S) lies in the region of, and preferably on, the optical axis (4),
- the concave mirror (13) is orientated about the vertex (S) so that the principal axis (14) of the concave mirror (13) essentially bisects the angle included by the straight line (15) between laser diode (1) and vertex (S) and the straight line (16) between light detector (9) [and vertex (S)] and
- the concave mirror (13) has an opening (13a) whose centreline essentially coincides with the optical axis (4) and whose diameter is at least equal to the diameter of the portion (2a) of the light beam (2) in the region of the concave mirror (13) that is used for recording, and through which the portion (2a) of the light beam (2) used for recording passes through the concave mirror (13) without loss and the portion (11) of the light beam (2) that is not used for recording is almost entirely focused on to the light detector (9).

2. Optoelectronic recording device for dot and line recording of information on a recording material, comprising
- a laser diode (1) for generating a light beam (2) along an optical axis (4),
- a lens (5) arranged on the optical axis (4) for focusing the light beam (2) on to the recording material (6),
- a light detector (9) arranged at a distance from the laser diode (1), for measuring the light output of the light beam (2) and
- a reflector arranged in the ray path of the light beam (2), which reflects a portion of the light beam (2) on to the light detector (9), **characterized in that**
- the reflector is formed as at least one segment (13b, 13c) of a concave mirror (13) and preferably as a concave mirror (13), which is positioned between the laser diode (1) and the lens (5),
- the concave mirror (13) is offset with respect to the optical axis (4) so that the principal axis (14) of the concave mirror (13) extends substantially parallel with, and at a distance (d) from, the optical axis (4), and
- the concave mirror (13) has an opening (13a) whose centreline is located essentially at the distance (d) from the principal axis (14) and whose diameter is at least equal to the diameter of the portion (2a) of the light beam (2) used for recording in the region of the concave mirror (13), and through which the portion (2a) of the light beam (2) used for recording passes through the concave mirror (13) without loss and the portion (11) of the light beam (2) that is not used for recording is almost entirely focused on to the light detector (9).

3. Optoelectronic recording device according to Claim 2, **characterized in that** laser diode (1) and light detector (9) are arranged on a straight line (17) extending substantially perpendicularly to the principal axis (14) of the concave mirror (13) and are each located at the distance (d) from the principal axis (14).

4. Optoelectronic recording device according to any one of Claims 1 to 3, **characterized in that** the form of the concave mirror (18) is spherical.

5. Optoelectronic recording device according to Claims 3 and 4, **characterized in that** the distance between the straight lines (17) and the concave mirror (13) is such that the centre point (M) of the spherical concave mirror (13) lies on the lines (17).

6. Optoelectronic recording device according to any one of Claims 1 to 5, **characterized in that** the concave mirror (13) consists of a glass body with an aluminized reflecting surface.

7. Optoelectronic recording device according to any one of Claims 1 to 6, **characterized in that**
- the portion (11) of the light beam (2) that is focused on to the light detector (9) by the concave mirror (18) is converted into a measuring signal and
- the measuring signal is used as an actual value for controlling the light output emitted by the laser diode (1).

8. Optoelectronic recording device according to any one of Claims 1 to 7, **characterized in that** a monitor diode is used as light detector (9).

## Revendications

1. Unité d'enregistrement optoélectronique pour l'enregistrement point par point et ligne par ligne d'informations sur un support d'enregistrement, comprenant:
- une diode laser (1) générant un faisceau lumineux (2) suivant un axe optique (4),
- un objectif (5) installé sur l'axe optique (4) pour focaliser le faisceau lumineux (2) sur le support d'enregistrement (6),
- un détecteur optique (9) éloigné de la diode laser (1) pour mesurer la puissance lumineuse du faisceau de lumière (2), et
- un réflecteur installé dans le chemin du faisceau lumineux (2) et qui réfléchit une partie du faisceau lumineux (2) sur le détecteur optique (9),
**caractérisée en ce que**
- le réflecteur est réalisé sous la forme d'au moins un élément (13b, 13c) d'un miroir concave (13), de préférence comme miroir concave (13), placé entre la diode laser (1) et l'objectif (5), et dont le sommet (S) se trouve au niveau de l'axe optique (4) et de préférence sur celui-ci,
- le miroir concave (13) est monté incliné tourné autour du sommet (S) pour que son axe principal (14) coupe, sensiblement suivant sa bissectrice, l'angle défini entre la droite d'écartement (15) passant entre la diode laser (1) et le sommet (S) et la droite d'écartement (16) par rapport au détecteur optique (9), et
- le miroir concave (13) comporte une ouverture (13a) dont l'axe coïncide principalement avec l'axe optique (4) et dont le diamètre correspond au moins au diamêtre de la partie (2a) du faisceau lumineux (2) utilisée pour l'enregistrement, au niveau du miroir concave (13), pour que la partie (2a) du faisceau lumineux (2) utilisée pour l'enregistrement traverse sans perte le miroir concave (13), et pour que la partie (11) du faisceau lumineux (12) non utilisée pour l'enregistrement soit focalisée pratiquement complètement sur le détecteur optique (9).

2. Unité d'enregistrement optoélectronique pour l'enregistrement point par point et ligne par ligne d'informations sur un support d'enregistrement, comprenant:
- une diode laser (1) générant un faisceau lumineux (2) suivant un axe optique (4),
- un objectif (5) installé sur l'axe optique (4) pour focaliser le faisceau lumineux (2) sur le support d'enregistrement (6),
- un détecteur optique (9) éloigné de la diode laser (1) pour mesurer la puissance lumineuse du faisceau de lumière (2), et
- un réflecteur installé dans le chemin du faisceau lumineux (2) et qui réfléchit une partie du faisceau lumineux (2) sur le détecteur optique (9),
**caractérisée en ce que**
- le réflecteur est réalisé au moins comme un segment (13b, 13c) d'un miroir concave (13), de preférence un miroir concave (13), placé entre la diode laser (1) et l'objectif (5),
- le miroir concave (13) est décalé par rapport à l'axe optique (4) pour que l'axe principal (14) du miroir concave (13) soit essentiellement parallèle à l'axe optique (4) à la distance (d), et
- le miroir concave (13) comporte une ouverture (13a) dont l'axe est essentiellement à la distance (d) de l'axe principal (14) et dont le diamètre correspondant au diamètre de la partie (2a) du faisceau lumineux (2) utilisée pour l'enregistrement, au niveau du miroir concave (13), pour que la partie (2a) du faisceau lumineux (2) utilisée pour l'enregistrement traverse le miroir concave (13) sans perte, et pour que la partie (11) du faisceau lumineux (2) non utilisée pour l'enregistrement soit focalisé pratiquement complètement sur le photodétecteur (9).

3. Unité selon la revendication 2,
**caractérisée en ce que**
la diode laser (1) et le photodétecteur (9) sont prévus sur une droite (17) essentiellement perpendiculaire à l'axe principal (14) du miroir concave (13), et sont chaque fois à la distance (d) de l'axe principal (14).

4. Unité selon l'une quelconque des revendications 1 à 3,
**caractérisée en ce que**
le miroir concave (13) est sphérique.

5. Unité selon les revendications 3 et 4,
**caractérisée en ce que**
la distance entre la droite (17) et le miroir concave (13) est choisie pour que le centre (M) du miroir concave sphérique (13) se trouve sur la droite (17).

6. Unité selon l'une quelconque des revendications 1 à 5,
**caractérisée en ce que**
le miroir concave (13) est un corps en verre dont la surface réfléchissante est de l'aluminium déposé à la vapeur.

7. Unité selon l'une quelconque des revendications 1 à 6,
**caractérisée en ce que**
- la partie (11) du faisceau lumineux (2) focalisée par le miroir concave (13) sur le photodétecteur (9), est transformée en un signal de mesure et,
- le signal de mesure est utilisé comme valeur réelle pour la régulation de la puissance lumineuse fournie par la diode laser (1).

8. Unité selon l'une quelconque des revendications 1 à 7,
**caractérisée en ce que**
le photodétecteur (9) est une diode de contrôle.
